# EUROPÄISCHE PATENTSCHRIFT

(11) **EP 2 015 888 B1**
(45) Veröffentlichungstag und Bekanntmachung des Hinweises auf die Patenterteilung: **06.07.2011**
(21) Anmeldenummer: 06742724.5
(22) Anmeldetag: 28.04.2006
(51) Int. Cl.: B23K 26/03, B23K 26/42

(54) **LASERBEARBEITUNGSVERFAHREN**
METHOD FOR LASER MACHINING
PROCÉDÉ D'USINAGE AU LASER

(43) Veröffentlichungstag der Anmeldung: 21.01.2009
(73) Patentinhaber: TRUMPF Werkzeugmaschinen GmbH + Co. KG, 71254 Ditzingen (DE)
(72) Erfinder: LAMBERT, Martin, 71404 Korb (DE)
(74) Vertreter: Kohler Schmid Möbus
(86) Internationale Anmeldenummer: PCT/EP2006/003957
(87) Internationale Veröffentlichungsnummer: WO 2007/124765

(56) Entgegenhaltungen:
- EP-A1- 0 988 916
- EP-A1- 1 215 774
- EP-A2- 0 252 268
- JP-A- 2000 094 173
- JP-A- 2003 290 944
- US-A1- 2001 045 419

## Beschreibung

Die Erfindung betrifft ein Verfahren zur Fehlschnitterkennung bei der Laserbearbeitung mittels einer Laserbearbeitungsmaschine, insbesondere zum Laserstrahlschneiden, mit einem Laserbearbeitungskopf mit einer Strahlführung zur Umlenkung und/oder Fokussierung der Laserstrahlung auf ein Werkstück, einer thermo-sensitiven Überwachungssensorik für eine optische Komponente der Strahlführung und einer an die Maschine angeschlossenen Auswerteeinheit zur Bearbeitung der von der Überwachungssensorik überwachten Daten, bei dem die Temperaturerhöhung der optischen Komponente der Strahlführung infolge von vom Werkstück reflektierter Strahlung überwacht wird. EP 1 215 774 A offenbart ein solches Verfahren.

Eine Laserbearbeitungsmaschine mit einer Vorrichtung zum Erfassen der Temperatur einer optischen Komponente über eine Lichtintensitätsmessung ist beispielsweise durch die EP 0988916 bekannt geworden. Hierdurch kann die Erwärmung der optischen Komponente durch Absorption der Laserstrahlung infolge Verschmutzung erkannt werden. Die Auswahl der lichtempfindlichen Sensorik sowie die Positionierung derselben sind so ausgelegt, dass möglichst nur das von der optischen Komponente abgestrahlte Licht erfasst wird.

Durch einen mangelhaften Laserschnitt kann es zu unvollständig ausgeschnittenen Werkstücken kommen. Der Begriff "mangelhaft" bezieht sich dabei auf einen nicht oder nur teilweise ausgeführten Schnitt. Ebenso können bei nicht vollständig erfolgter Trennung Bauteile des Laserbearbeitungskopfs, insbesondere die optischen Komponenten der Strahlführung, oder weitere angrenzende Elemente durch die vom Werkstück reflektierte Strahlung gefährdet sein.

Eine Detektierung der reflektierten Strahlung zur Online-Prozessüberwachung beim Laserstrahlschweißen ist u.a. durch Müller et al., "Online process monitoring of laser welding by measuring the reflected laser power", bekannt. Die vom Werkstück reflektierte Strahlung wird dabei als Indikator für die Schweißqualität herangezogen. Der Anteil dieser Strahlung ist abhängig von dem Verhältnis Tiefe zu Durchmesser des eingestochenen Loches ("keyhole") und korreliert mit der Einschweißtiefe.

Die zur Erfassung notwendige bekannte Sensorik, ggf. in Kombination mit Hochgeschwindigkeitskameras, erhöht den Bauraum sowie die Komplexität und ist mit entsprechenden Kosten verbunden. Weiterhin können Limitationen hinsichtlich der Zugänglichkeit auftreten.

Eine weitere Alternative zur Prozessüberwachung ist in der eingangs genannten Druckschrift durch die Nutzung kapazitiver Sensoren zur Kontrolle der Fokusposition beim Laserstrahlschneiden beschrieben. Diese ist jedoch nicht allein ausschlaggebend für das Eintreten von Fehlschnitten und bietet somit keine ausreichende Sicherheit.

Aus der EP 1 215 774 A ist eine Einrichtung zur Strahlformung eines Laserstrahls bekannt geworden, bei der mittels einer Messeinrichtung die Temperatur einer Blende erfasst und daraus ein Temperatursignal generiert wird, welches als Steuersignal zum Verstellen eines adaptiven Spiegels oder zum Verschieben der Blende dient.

In der EP 0 252 268 A2 ist ein Verfahren zum Überwachen eines Bearbeitungsprozesses mit einer Hochleistungsenergiequelle (z.B. einem Laser) beschrieben, bei dem u.a. die Intensität der rückreflektierten Strahlung überwacht wird. Zu diesem Zweck sind Messwertaufnehmer, insbesondere in Form von drahtförmigen Widerstandsthermometern, einem Umlenkspiegel und/oder einem Fokussierspiegel der Bearbeitungsoptik zugeordnet.

Aus der US 2001/0045419 A1 ist ein deformierbarer Spiegel zur Fokuslagenverstellung bekannt geworden, bei dem ein Temperatursensor vorgesehen werden kann, um temperaturbedingte Veränderungen des Hubs eines für die Deformation des Spiegels vorgesehenen Aktuators zu kompensieren.

Die JP 2000 94173 A beschreibt eine Vorrichtung zur Fokuslagenverstellung einer Linse, um eine durch den temperaturabhängig variierenden Brechungsindex der Linse hervorgerufene Fokuslagenverschiebung zu kompensieren.

Aus der JP 2003 290 944 A ist eine Laserbearbeitungsmaschine bekannt geworden, bei der eine durch eine Temperaturveränderung an einem Galvanometer-Spiegel hervorgerufene Verschlechterung der Präzision der Bearbeitungsposition mit Hilfe eines Temperatursensors kompensiert wird.

Der Erfindung liegt die Aufgabe zugrunde, ein Verfahren der eingangs genannten Art weiterzubilden, das eine Fehlschnitterkennung und angepasste Prozessregelung zuverlässig und mit minimiertem Aufwand ermöglicht.

Diese Aufgabe wird durch ein Verfahren der eingangs genannten Art gelöst, bei dem die Strahlführung derart ausgelegt wird, dass die Dimension der vom Werkstück reflektierten Strahlung senkrecht zur Strahlachse am Ort der Komponente die Dimension der in Richtung Werkstück propagierenden Laserstrahlung übersteigt, und die Auswerteeinheit eine Temperaturerhöhung der optischen Komponente der Strahlführung infolge der vom Werkstück reflektierten Laserstrahlung einem Fehlschnitt zuordnet.

Bei einem Fehlschnitt wird ein großer Anteil des Laserlichtes auf dem Schmelzbad in der Schnittfuge reflektiert. Die Effekte der vom Werkstück reflektierten Strahlung können durch eine angepasste Auslegung der Strahlführung und deren Komponenten durch eine thermo-sensitive Überwachungssensorik detektiert und durch eine Auswerteeinheit ausgewertet werden. Die Ergebnisse dieser Auswertung werden zur Regelung der Laserbearbeitungsmaschine herangezogen.

Durch die optischen Komponenten der Strahlführung wird die reflektierte Strahlung umgelenkt und/oder reflektiert. Hierdurch kann sich die vom Werkstück reflektierte Strahlung lokal so ausformen, dass ihre Dimension senkrecht/radial zur Strahlachse die des in Richtung Werkstück propagierenden Laserstrahls übersteigt. Die an diesem Ort befindlichen optischen (oder sonstigen) Komponenten der Strahlführung erwärmen sich über die übliche Arbeitstemperatur hinaus. Bei frühzeitiger Erfassung des Temperaturanstieges lässt sich der Fehlschnitt zuverlässig erkennen, und die Prozessregelung kann über die Auswerteeinheit reagieren. Als Regelungsmöglichkeiten sind beispielsweise sofortiges oder verzögertes Abschalten oder Nachregeln sowie deren Kombinationen in Abhängigkeit definierter Grenzwerte vorstellbar. Möglich ist auch die Definition mehrerer Temperaturgrenzwerte und der damit verbundenen Regelungen (Staffelung).

Beispielsweise ist es vorstellbar, bei geringfügiger Temperaturerhöhung zunächst die Abtastrate der Überwachungssensorik zu erhöhen und anschließend eine Nachregelung der Laserbearbeitung durchzuführen, wenn die Temperatur weiter über den nächstliegenden Grenzwert steigt. Fällt die Temperatur nicht auf das normale/tolerierbare Bearbeitungsniveau zurück, wird die Laserbearbeitung beendet, indem die Laserbearbeitungsmaschine abgeschaltet wird. Diese und andere Regelungsschritte können dabei sowohl bei der Bearbeitung eines Werkstücks als auch innerhalb einer Werkstückserie (Regglungsschritt erfolgt von Werkstück zu Werkstück) erfolgen.

Die überwachte Komponente kann beispielsweise eine Blende sein. Hier werden entsprechende Temperaturveränderungen aufgrund von der Schmelze reflektierter Strahlung mit geringer Verzögerung detektiert. Ist diese Blende im bzw. nahe an einem Zwischenfokus der in Richtung Werkstück propagierenden Strahlung angeordnet, so kann ihre Öffnung kleinstmöglich gehalten werden. Je kleiner die Öffnung, desto eher kann der reflektierte Strahl zur Erwärmung der Blende führen. Dies kann auch bedeuten, dass hierdurch die Messempfindlichkeit erhöht wird.

Die Temperaturmessung an den zu überwachenden Komponenten kann zudem direkt oder indirekt erfolgen. Bei der direkten Messung wird die Temperatur an der überwachten Komponente abgenommen. Ist dies aufgrund mangelnder Zugänglichkeit oder aus anderen Gründen (aus fertigungstechnischer, wirtschaftlicher oder sonstiger Sicht) nicht möglich, so kann beispielsweise die Temperatur einer (benachbarte) Komponente aufgezeichnet werden, die Rückschlüsse auf die Temperatur oder eine Temperaturveränderung der optischen Komponente erlaubt. Vorstellbar sind hier beispielsweise eine Temperaturüberwachung der Blendenhalterung oder die Überwachung der Kennwerte der Blendenkühlung (Temperatur, Durchfluss,... ).

Die Temperatur kann über ein Thermoelement berührend gemessen werden, was die einfachste Form der Überwachung darstellt. Ist dies nicht möglich, so können auch berührungslose Messmethoden, beispielsweise über die Verwendung eines Pyrometers, zum Einsatz kommen.

Bevorzugte Ausführungsformen der Erfindung sind in der Zeichnung schematisch dargestellt und werden nachfolgend mit Bezug zu den Figuren näher erläutert. Im Einzelnen zeigt:
- **Fig. 1:**: eine erste Laserbearbeitungsmaschine mit Mitteln zur Fehlschnitterkennung in der Seitenansicht;
- **Fig. 2:**: eine zweite Laserbearbeitungsmaschine mit Mitteln zur Fehlschnitterkennung in der Seitenansicht;
- **Fig. 3:**: einen Laserbearbeitungskopf der Laserbearbeitungsmaschine nach Fig. 1 oder 2 im Längsschnitt;
- **Fig. 4:**: einen Ausschnitt des Laserbearbeitungskopfes mit direkter Temperaturüberwachung;
- **Fig. 5:**: einen Ausschnitt des Laserbearbeitungskopfes mit indirekter Temperaturüberwachung;
- **Fig. 6:**: einen Ausschnitt des Laserbearbeitungskopfes mit berührungsloser, direkter Temperaturüberwachung;
- **Fig. 7:**: einen Ausschnitt des Laserbearbeitungskopfes mit berührungsloser, indirekter Temperaturüberwachung

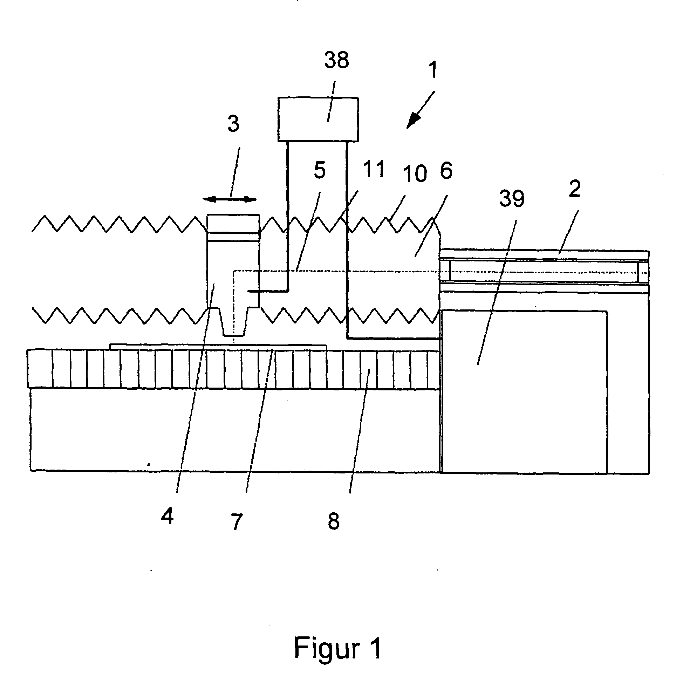

**Fig. 1** zeigt beispielhaft eine CO₂-Laserbearbeitungsmaschine mit einem Lasergenerator **2** sowie einem relativ dazu in Richtung des Doppelpfeils **3** bewegbaren Laserbearbeitungskopf **4.** Ein mittels des Lasergenerators erzeugter Laserstrahl **5** wird ausgehend von dem Lasergenerator durch einen Strahlführungsraum **6** zu dem Bearbeitungskopf 4 geleitet und an diesem auf ein zu bearbeitendes Werkstück **7** in Form eines Bleches gelenkt, das auf einer Werkstückauflage **8** der Laserbearbeitungsmaschine 1 abgelegt ist.

Die Effekte der vom Werkstück 7 reflektierten Strahlung bei einem Fehlschnitt können durch eine Temperaturüberwachung von Komponenten der Strahlführung des Laserbearbeitungskopfs 4 detektiert, ausgewertet und zur Regelung herangezogen werden.

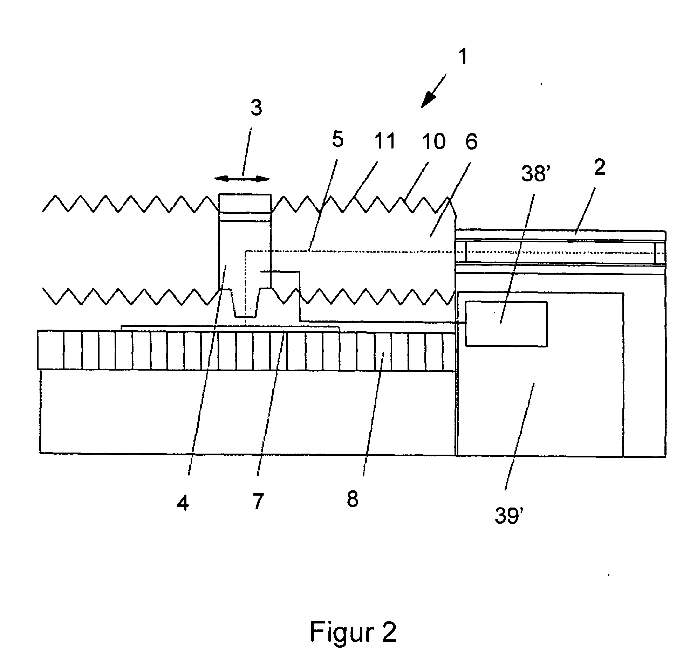

Eine Auswerteeinheit **38** gibt dann bei Überschreitung eines definierten Temperaturgrenzwertes den entsprechenden Maschinenbefehl an eine Maschinensteuerung **39,** die die Regelungsmaßnahme vornimmt. Die Auswerteeinheit 38 kann dabei als separate Einheit verstanden werden, oder die Auswerteeinheit **38'** ist wie in **Fig. 2** Bestandteil der Maschinensteuerung **39'.**

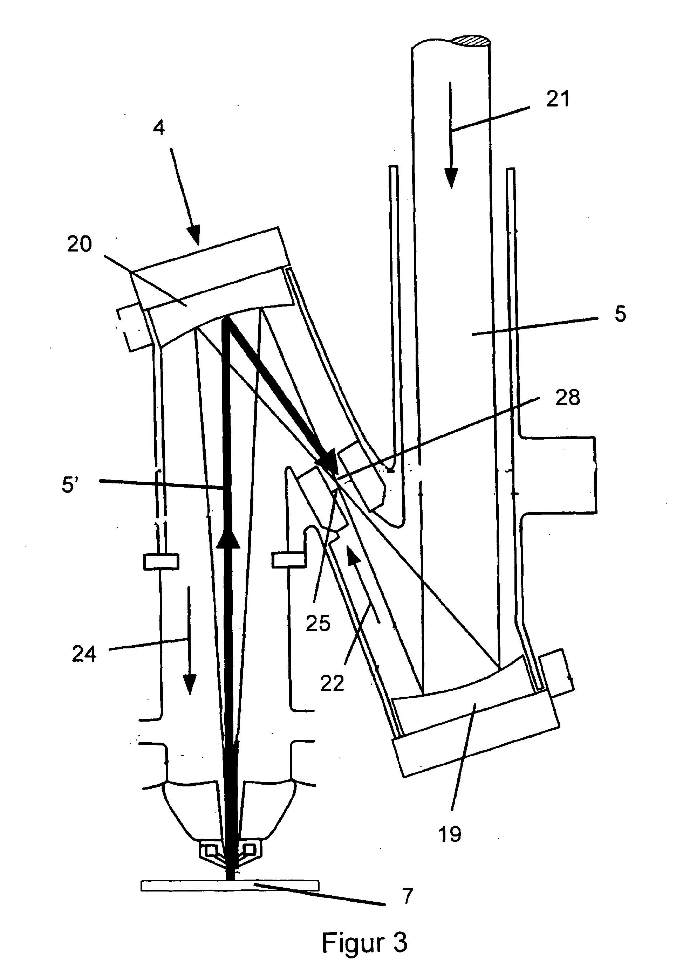

Vom Lasergenerator in Pfeilrichtung **21** kommend, wird das Laserlicht 5 im Laserbearbeitungskopf 4 gemäß **Fig. 3** von einem Parabolspiegel **19** in einem Zwischenfokus in Pfeilrichtung **22** fokussiert und fällt anschließend auf einen Ellipsoid-Spiegel **20,** der das Laserlicht 5 für den eigentlichen Bearbeitungsprozess in Pfeilrichtung **24** fokussiert.

Bei einem Fehlschnitt wird ein großer Anteil des Laserlichts 5 auf dem Schmelzbad in der Schnittfuge des Werkstücks 7 in den Laserbearbeitungskopf 4 reflektiert und fällt als Laserlicht **5'** auf den Ellipsoidspiegel 20. Das nahezu punktförmig vom Schmelzbad kommende Licht 5'wird rückwärts in den Zwischenfokus **28** projiziert. Da die Schmelze eine undefinierte Spiegelfläche darstellt, entsteht ein relativ großer Fokusfleck am Ort der Zwischenblende **25.** Das Licht fällt nun teilweise auf die Zwischenblende 25 und erwärmt diese.

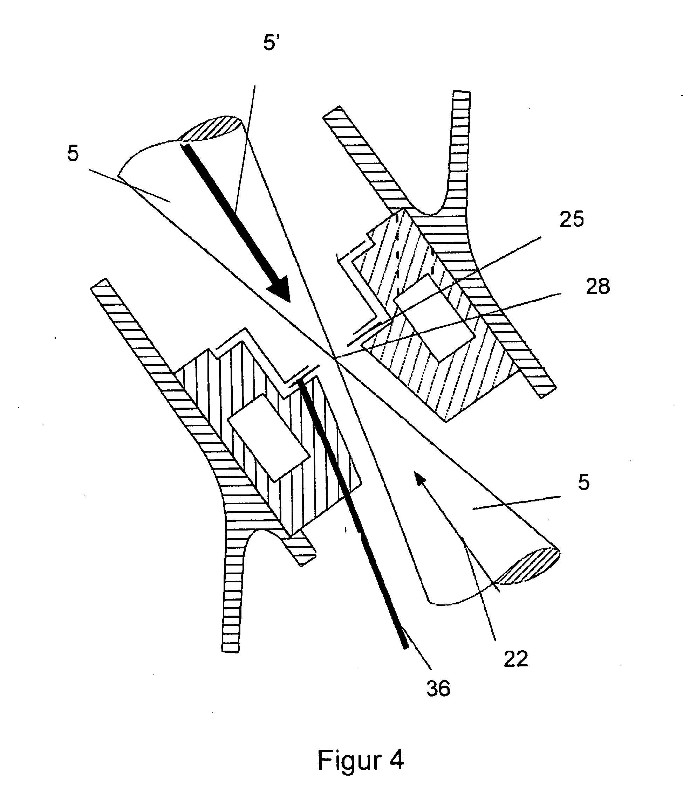

Die Überwachung einer optischen Komponete der Strahlführung des Bearbeitungskopfes wird in **Fig. 4** über eine berührende Temperaturmessung, hier über ein Thermoelement **36,** direkt an der Blende 25 gelöst.

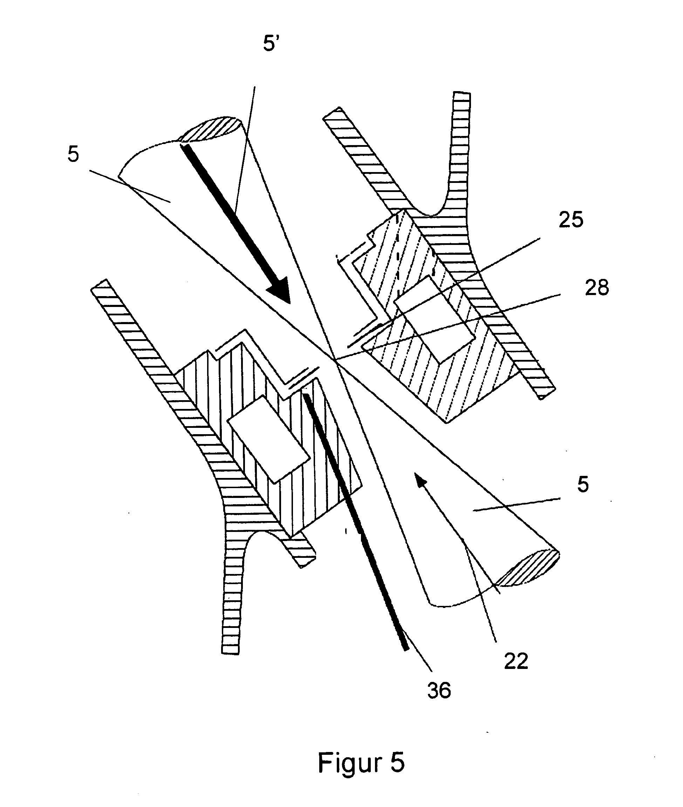

Erlauben die Zugänglichkeit, das Material oder sonstige Umstände keine direkte Messung, so kann die Überwachung auch gemäß **Fig. 5** indirekt über die Messung der Temperatur einer benachbarten Komponente erfolgen, vorausgesetzt, die Temperaturerhöhung kann, ausgelöst durch die Erwärmung der eigentlich zu überwachenden Komponente, ebenso zuverlässig einem Fehlschnitt zugeordnet werden.

Neben der berührenden Messung können als Überwachungssensorik auch berührungslose, vornehmlich optische Messsysteme, wie beispielsweise ein Pyrometer, zum Einsatz kommen.

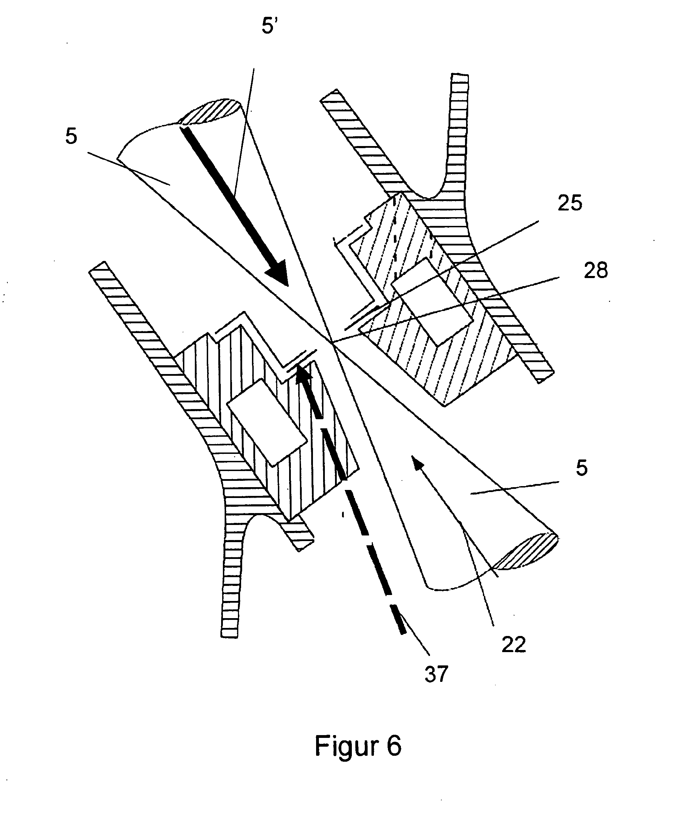

In **Fig. 6** erfolgt die Messung direkt an der Blende, wobei das Pyrometer **37** so ausgerichtet ist, dass es die Wärmestrahlung in Richtung Lasergenerator aufnimmt.

Entsprechend ist auch eine Positionierung des Pyrometers auf der werkstückzugewandten Seite der optischen Komponente möglich. Dies gilt ebenso für die berührende Messung.

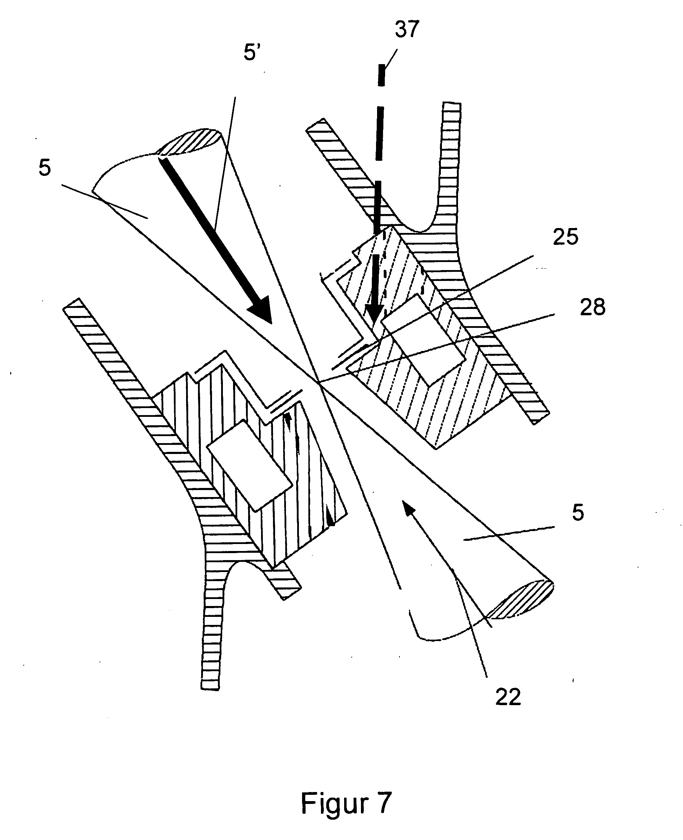

Ist die zu überwachende Komponente nicht zugänglich oder sprechen sonstige Gründe gegen eine direkte Messung, kann die berührungslose Messung ebenso wie die berührende gemäß **Fig. 7** über die Aufnahme der Wärmestrahlung indirekt an einer benachbarten Komponente erfolgen.

## Patentansprüche

1. Verfahren zur Fehlschnitterkennung bei der Laserbearbeitung mittels einer Laserbearbeitungsmaschine (1), umfassend einen Laserbearbeitungskopf (4) mit einer Strahlführung zur Umlenkung und/oder Fokussierung der Laserstrahlung (5) auf ein Werkstück (7), eine thermo-sensitive Überwachungssensorik für eine optische Komponente (25) der Strahlführung und eine an die Maschinensteuerung (39) angeschlossene Auswerteeinheit (38) zur Bearbeitung der von der Überwachungssensorik erfassten Daten, bei dem die Temperaturerhöhung der optischen Komponente (25) der Strahlführung infolge von vom Werkstück (7) reflektierter Strahlung (5') überwacht wird, **dadurch gekennzeichnet, dass** die Strahlführung derart ausgelegt wird, dass die Dimension der vom Werkstück (7) reflektierten Strahlung (5') senkrecht zur Strahlachse am Ort der Komponente (25) die Dimension der in Richtung Werkstück (7) propagierenden Laserstrahlung (5) übersteigt, und die Auswerteeinheit (38) eine Temperaturerhöhung der optischen Komponente (25) der Strahlführung infolge der vom Werkstück (7) reflektierten Laserstrahlung (5') einem Fehlschnitt zuordnet.

2. Verfahren nach Anspruch 1, **dadurch gekennzeichnet, dass** das Überschreiten eines definierten Temperaturgrenzwertes zum sofortigen oder verzögerten Abschalten oder zum Nachregeln der Laserbearbeitung führt.

3. Verfahren nach einem der Ansprüche 1 oder 2, **dadurch gekennzeichnet, dass** verschiedene Temperaturgrenzwerte unterschiedlichen Reaktionen/Maschinenbefehlen zugeordnet werden.

## Claims

1. A method for detecting defective cutting in laser processing by means of a laser processing machine (1) comprising a laser processing head (4) with a beam guide for deflecting and/or focusing the laser radiation (5) onto a workpiece (7), a thermo-sensitive monitoring sensor system for an optical component (25) of the beam guide, and an evaluation unit (38), connected to the machine control (39), for processing the data acquired by the monitoring sensor system, in which method the increase in the temperature of the optical component (25) of the beam guide due to radiation (5') reflected from the workpiece (7) is monitored, **characterised in that** the beam guide is configured in such a manner that the dimension of the radiation (5') reflected from the workpiece (7), perpendicular to the beam axis at the location of the component (25), exceeds the dimension of the laser radiation (5) propagating in the direction towards the workpiece (7), and the evaluation unit (38) attributes an increase in the temperature of the optical component (25) of the beam guide due to the laser radiation (5') reflected from the workpiece (7) to defective cutting.

2. A method according to claim 1, **characterised in that** the exceeding of a defined temperature limit results in the immediate or delayed switching-off of the laser processing or to the correction of the laser processing.

3. A method according to either claim 1 or claim 2, **characterised in that** different temperature limits are associated with different reactions/machine commands.

## Revendications

1. Procédé de détection des coupes erronées lors de l'usinage au laser au moyen d'une machine d'usinage au laser (1) comprenant une tête d'usinage au laser (4) avec un guide de faisceau pour dévier et/ou focaliser le rayonnement laser (5) sur une pièce (7), un capteur de surveillance thermosensible pour un composant optique (25) du guide de faisceau et une unité d'évaluation (38) raccordée à la commande de machine (39) pour traiter les données saisies par le capteur de surveillance, dans lequel procédé l'élévation de température du composant optique (25) du guide de faisceau par suite du rayonnement (5') réfléchi par la pièce (7) est surveillée, **caractérisé en ce que** le guide de faisceau est conçu de façon que la dimension du rayonnement (5') réfléchi par la pièce (7) dépasse, perpendiculairement à l'axe du faisceau à l'emplacement du composant (25), la dimension du rayonnement laser (5) se propageant en direction de la pièce (7), et l'unité d'évaluation (38) associe une élévation de température du composant optique (25) du guide de faisceau par suite du rayonnement (5') réfléchi par la pièce (7) à une coupe erronée.

2. Procédé selon la revendication 1, **caractérisé en ce que** le dépassement d'une valeur limite de température définie entraîne l'arrêt immédiat ou temporisé ou le réajustement de l'usinage au laser.

3. Procédé selon une des revendications 1 ou 2, **caractérisé en ce que** différentes valeurs limites de température sont associées à différentes réactions/instructions de la machine.
